# EUROPÄISCHE PATENTANMELDUNG

(11) **EP 1 734 194 A2**
(43) Veröffentlichungstag der Anmeldung: **20.12.2006**
(21) Anmeldenummer: 06012114.2
(22) Anmeldetag: 13.06.2006
(51) Int. Cl.: E04B 1/80

(54) **Wandelement und zugehöriges Ausgleichselement**

(30) Priorität: 16.06.2005 DE 102005027976
(71) Anmelder: Variotec Sandwichelemente GmbH & Co. KG, 92318 Neumarkt (DE)
(72) Erfinder: Stölzel, Christof, 92318 Neumarkt/Voggenthal (DE)
(74) Vertreter: Zinnecker, Armin

(57) **Zusammenfassung**

Ein Wandelement umfaßt eine Vakuumisolationsplatte (38), ein äußeres Betonfertigteil (2) und ein inneres Betonfertigteil (1), die durch Anker (14) miteinander verbunden sind. Um ein derartiges Wandelement zu verbessern ist ein Betonfertigteil (1) von der Vakuumisolationsplatte (38) beabstandet (Fig. 1).

## Beschreibung

Die Erfindung betrifft ein Wandelement, ein Ausgleichselement für ein derartiges Wandelement, ein Bauteil, das aus einem derartigen Wandelement und einem derartigen Ausgleichselement besteht, und ein Bauteil, das aus einem Wandelement, insbesondere einem erfindungsgemäßen Wandelement, einem weiteren Bauelement und einem erfindungsgemäßen Ausgleichselement besteht.

Das Wandelement umfaßt eine oder mehrere Vakuumisolationsplatten, ein äußeres Betonfertigteil und ein inneres Betonfertigteil, die durch Anker miteinander verbunden sind.

Ein derartiges Wandelement wird in der prioritätsälteren, nicht vorveröffentlichten Europäischen Patentanmeldung Nr. 04 029 733 beschrieben. Es umfaßt eine Vakuumisolationsplatte, die in der genannten Voranmeldung als Verbundwärmedämmplatte bezeichnet wird, und zwei auf beiden Seiten der Vakuumisolationsplatte vorgesehene Betonteile, die unmittelbar an die Vakuumisolationsplatte angrenzen.

Die Vakuumisolationsplatte umfaßt eine oder mehrere Vakuumdämmplatten aus einem evakuierbaren, porösen Material geringer Wärmeleitfähigkeit und eine vakuumdichte Umhüllung, insbesondere eine gasdichte und diffusionsdichte Umhüllung. Besonders geeignet sind Folien aus Kunststoff, Folien aus Metall, insbesondere aus Aluminium, oder Folien aus Kunststoff und Metall, insbesondere eine metallisierte Hochbarrierefolie aus Kunststoff. Die Vakuumdämmplatten bilden den Kern der Vakuumisolationsplatte. Als Material für die Vakuumdämmplatten sind insbesondere mikroporöse Kieselsäurepulver oder offenporige Schäume aus Polyurethan oder Polystyrol geeignet. Bei mikroporösen Kernen genügt aufgrund ihrer extrem kleinen Porengröße von weniger als einem halben Mikrometer ein Vakuum von etwa 1 bis 10 mbar. Bei offenporigen Schäumen ist es dagegen vorteilhaft oder erforderlich, daß die Gasdrücke aufgrund der gröberen Poren im Bereich von 0,1 bis 1 mbar liegen.

Wenn mehrere Vakuumdämmplatten von einer Umhüllung umgeben sind, liegen diese Vakuumdämmplatten vorzugsweise nebeneinander. Vorteilhaft ist es, die in der Europäischen Patentanmeldung 04 029 733 beschriebenen Merkmale vorzusehen. Die eine oder mehreren Vakuumdämmplatten können beidseitig von Kunststoffschaum, vorzugsweise von Polyurethanschaum, umgeben sein. Vorzugsweise ist der Kunststoffschaum bzw. Polyurethanschaum von der vakuumdichten Umhüllung abgedeckt.

Die vakuumdichte Umhüllung ist vorzugsweise von mindestens einer weiteren Platte abgedeckt, die aus Kunststoffschaum, vorzugsweise aus Polyurethanschaum, vorzugsweise aus gepresstem Polyurethanschaum, aber auch aus einem anderen Werkstoff mit niedriger Wärmeleitfähigkeit bestehen kann. Die weitere Platte ist vorzugsweise auf die Umhüllung bzw. auf die Aluminiumfolie aufgeklebt.

Nach einer weiteren vorteilhaften Weiterbildung sind die Außenkanten der Vakuumdämmplatten von einem druckstabilen Konstruktionsschaum umgeben. Der druckstabile Konstruktionsschaum umgibt vorzugsweise den gesamten umlaufenden Rand der Vakuumdämmplatten. Er weist vorzugsweise die gleiche Stärke auf wie die Vakuumdämmplatten. Vorzugsweise besteht der druckstabile Konstruktionsschaum aus Polyurethan. Zur Herstellung dieser vorteilhaften Weiterbildung kann der druckstabile Konstruktionsschaum vor dem beidseitigen Umschäumen mit Kunststoffschaum im Kantenbereich der Vakuumdämmplatten in vorzugsweise gleicher Stärke als Abstandshalter eingelegt werden.

Eine weitere vorteilhafte Weiterbildung ist dadurch gekennzeichnet, daß die Außenkanten der Vakuumdämmplatten bzw. des druckstabilen Konstruktionsschaums von einer Hochbarrierefolie umgeben sind. Die Hochbarrierefolie wirkt vorzugsweise als Diffusionssperrschicht, die eine Permeation von Gas und Wasserdampf in die Vakuumdämmplatten verhindert. Sie ist vorzugsweise gasdicht und diffusionsdicht. Die Hochbarrierefolie ist vorzugsweise aus Kunststoff, vorzugsweise aus Butyl. Sie kann allerdings auch aus einem beschichteten Gewebe bestehen, insbesondere aus einem mit Butyl oder einem anderen geeigneten Kunststoff beschichteten Gewebe. Vorteilhaft ist es, wenn die Hochbarrierefolie U-förmig ausgestaltet ist.

Vorteilhaft ist es, wenn die Hochbarrierefolie an der vakuumdichten Umhüllung anliegt. Die Hochbarrierefolie ist vorzugsweise mit der Umhüllung verklebt. Vorteilhaft ist es, wenn die Hochbarrierefolie U-förmig ist und die Schenkel der Hochbarrierefolie an der Umhüllung anliegen bzw. mit der Umhüllung verklebt sind.

Zur Herstellung dieser vorteilhaften Weiterbildung kann um die Außenkanten der Vakuumdämmplatten bzw. des druckstabilen Konstruktionsschaums eine vorzugsweise U-förmige Hochbarrierefolie herumgelegt werden. Die Schenkel der Hochbarrierefolie können mit der vakuumdichten Umhüllung verklebt werden, so daß der Innenraum gut gegen eindringende Gase und Feuchtigkeit geschützt ist.

Nach einer weiteren vorteilhaften Weiterbildung sind die Außenkanten der Vakuumdämmplatten von einem vorkomprimierten Fugendichtband (Compriband) umgeben, das seinerseits von einer Hochbarrierefolie umgeben ist, insbesondere von einem Butylband.

An oder in einer oder mehreren oder allen Vakuumdämmplatten kann ein Sensor zur Überprüfung des Gasdrucks angebracht sein. Der Sensor kann über elektrische Zuleitungen ausgelesen werden.

Eine oder mehrere oder alle Vakuumdämmplatten können Aussparungen aufweisen, in die Anker eingesetzt werden oder sind. Die Aussparungen können sich in der Mitte und/oder an den Rändern der Vakuumdämmplatten befinden. Zur Herstellung dieser vorteilhaften Weiterbildung können an Stellen, an denen Aussparungen in den Vakuumdämmplatten vorhanden sind, durch die Vakuumisolationsplatte hindurch Löcher gefräst und dort Anker eingesetzt werden. Die Anker sind vorzugsweise aus einem Material mit niedriger Wärmeleitung und/oder hoher mechanischen Festigkeit hergestellt, vorzugsweise aus Kohlefaser, Glasfaser oder vergleichbaren Werkstoffen wie beispielsweise Wood Composites Plastic. Besonders geeignet sind GFK-Werkstoffe und kohlefaserverstärkter Kunststoff.

Zur Herstellung des Wandelements kann die Vakuumisolationsplatte auf eine Betonplatte, insbesondere auf eine frisch gegossene Betonplatte, gesetzt werden. Die andere Seite der Vakuumisolationsplatte kann ebenfalls mit Beton ausgefüllt werden, vorzugsweise in einer Betonschalung. Die Anker können dabei eine innige Verbindung mit der Betonplatte und/oder dem Beton und/oder der Betonschalung eingehen. Wenn die Vakuumisolationsplatte mit ihrer unteren Seite auf die vorzugsweise frisch gegossene Betonplatte gesetzt wird, wird ihre obere Seite in der beschriebenen Weise vorzugsweise in einer Betonschalung mit Beton ausgefüllt.

Eine weitere vorteilhafte Weiterbildung ist dadurch gekennzeichnet, daß die Vakuumisolationsplatte mit einer Innenplatte und mit einer Außenplatte aus Beton verbunden ist. Die Verbindung der Vakuumisolationsplatte mit der Innenplatte und/oder der Außenplatte erfolgt vorzugsweise durch Verkleben. Die Innenplatte und/oder die Außenplatte sind mit der Vakuumisolationsplatte über die aus der Vakuumisolationsplatte herausstehenden Anker verbunden.

Aufgabe der Erfindung ist es, ein derartiges Wandelement zu verbessern.

Erfindungsgemäß wird diese Aufgabe dadurch gelöst, daß ein Betonfertigteil von der Vakuumisolationsplatte beabstandet ist. Der freie Raum zwischen der Vakuumisolationsplatte und diesem Betonfertigteil wird durch einen oder mehrere Anker überbrückt. In diesen Raum kann bei der Herstellung eines Gebäudes Ortbeton eingebracht werden. Hierdurch kann die Wandstärke erhöht werden. Ferner kann die Wand einfach und schnell hergestellt werden.

Es ist möglich, daß beide Betonfertigteile von der Vakuumisolationsplatte beabstandet sind. In den meisten Fällen ist es allerdings vorteilhaft, wenn nur eines der beiden Betonfertigteile von der Vakuumisolationsplatte beabstandet ist.

Vorteilhaft ist es, wenn das innere Betonfertigteil von der Vakuumisolationsplatte beabstandet ist. Dabei ist es vorteilhaft, wenn in diesem Fall das äußere Betonfertigteil nicht von der Vakuumisolationsplatte beabstandet ist.

Die Erfindung betrifft ferner ein Ausgleichselement für ein Wandelement, umfassend eine Vakuumisolationsplatte, ein äußeres Betonfertigteil und ein inneres Betonfertigteil, die durch Anker miteinander verbunden sind, insbesondere für ein erfindungsgemäßes Wandelement. Bei der Herstellung einer Wand aus den erfindungsgemäßen Wandelementen werden die Wandelemente aneinandergesetzt und übereinandergesetzt. Sie werden ferner auf Bodenplatten und andere Sonderbauteile gesetzt. Das Ausgleichselement dient erfindungsgemäß zum Ausgleich der Fertigungstoleranzen der Wandelemente.

Vorteilhafte Weiterbildungen sind in den Unteransprüchen beschrieben.

Vorzugsweise umfaßt das Ausgleichselement einen plattenförmigen Körper aus einem zusammendrückbaren Material. Der plattenförmige Körper ist vorzugsweise aus Kunststoff hergestellt. Besonders geeignet ist Schaumstoff, vorzugsweise PE-Schaumstoff.

Der plattenförmige Körper kann als Plattenware oder als Fugenstreifen hergestellt sein.

Vorzugsweise ist der plattenförmige Körper von einer gasdichten und diffusionsdichten Schicht umgeben. Er kann von dieser Schicht teilweise oder vollständig umgeben sein. Vorteilhaft ist es, wenn die gasdichte und diffusionsdichte Schicht ein Kunststoffband, vorzugsweise ein Butylband, umfaßt oder daraus besteht.

Eine weitere vorteilhafte Weitebildung ist dadurch gekennzeichnet, daß auf dem plattenförmigen Körper ein Compriband vorgesehen ist. Das Compriband, das vorzugsweise von einer gasdichten und diffusionsdichten Schicht umgeben ist, ist mit dem plattenförmigen Körper vorzugsweise verklebt.

Das Ausgleichselement kann Ausgleichplättchen, vorzugsweise aus Kunststoff, umfassen.

Ein erfindungsgemäßes Bauteil besteht aus einem erfindungsgemäßen Wandelement und aus einem erfindungsgemäßen Ausgleichselement.

Die Erfindung betrifft ferner ein Bauteil, bestehend aus einem erfindungsgemäßen Wandelement, einem weiteren Bauelement und einem erfindungsgemäßen Ausgleichselement. Bei dem weiteren Bauelement kann es sich um ein Wandelement, insbesondere ein erfindungsgemäßes Wandelement handeln. Es kann sich allerdings auch um eine Bodenplatte oder um ein sonstiges Sonderbauelement handeln. Das weitere Bauelement kann sich unter oder über dem erfindungsgemäßen Wandelement befinden. Das Ausgleichselement befindet sich zwischen dem erfindungsgemäßen Wandelement und dem weiteren Bauelement.

Vorzugsweise ist das äußere Betonfertigteil des oder eines Wandelements mit einem plattenförmigen Körper der beschriebenen Art versehen.

Vorteilhaft ist es, wenn das innere Betonfertigteil des oder eines Wandelements mit einem oder mehreren Ausgleichsplättchen der beschriebenen Art versehen ist.

Ausführungsbeispiele der Erfindung werden nachstehend anhand der beigefügten Zeichnung im einzelnen erläutert. In der Zeichnung zeigt
- Fig. 1: eine Bodenplatte, ein Wandelement und ein Ausgleichselement in einer seitlichen Schnittansicht,
- Fig. 2: zwei Wandelemente und ein Ausgleichselement,
- Fig. 3: eine vergrößerte Darstellung des Ausgleichselements gemäß Fig. 2,
- Fig. 4: zwei Wandelemente, eine Zwischendecke und ein Ausgleichselement in einer seitlichen Schnittansicht,
- Fig. 5: den Randbereich einer Vakuumisolationsplatte in einer seitlichen Schnittansicht und
- Fig. 6: zwei nebeneinanderliegende Vakuumisolationsplatten in einer Teilansicht von vorne.

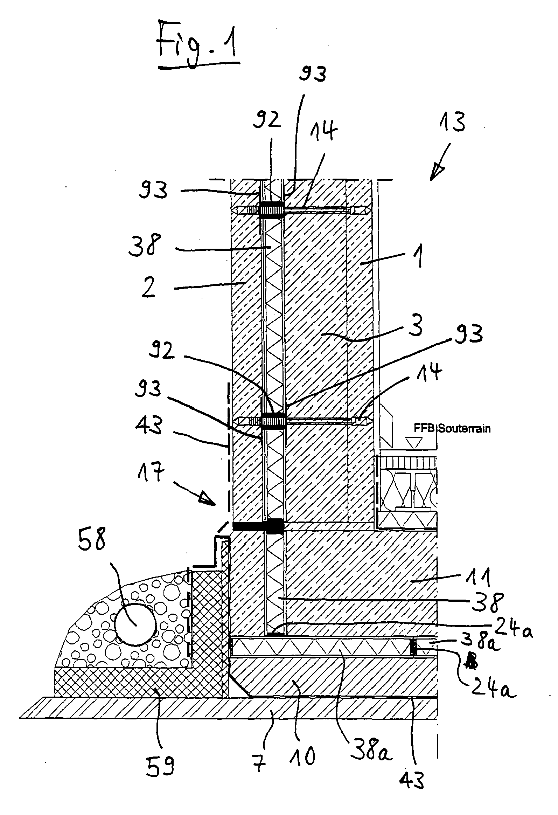

Das in Fig. 1 gezeigte Wandelement 13 umfaßt eine Vakuumisolationsplatte (VIP) 38, ein äußeres Betonfertigteil 2 und ein inneres Betonfertigteil 1, die durch Anker 14, nämlich GFK-Anker, miteinander verbunden sind. Das innere Betonfertigteil 1 ist von der Vakuumisolationsplatte 38 beabstandet. Bei der Herstellung der Wand wird der Zwischenraum zwischen der Vakuumisolationsplatte 38 und dem inneren Betonfertigteil 1 durch Ortbeton 3 gefüllt.

Die Anker 14 sind vorzugsweise aus einem Material mit einer geringen Wärmeleitfähigkeit und/oder mit einer hohen mechanischen Festigkeit hergestellt. Besonders geeignet sind GFK-Werkstoffe und kohlefaserverstärkter Kunststoff. Die Anker 14 sind von jeweils einer Hülse 92 umgeben. Ferner sind im Bereich der Anker 14 beidseits der Vakuumisolationsplatten 38 Abdeckscheiben 93 vorgesehen, die eine mittige Öffnung zum Durchtritt eines Ankers 14 aufweisen, die sich an die Enden der Hülsen 92 nach außen anschließen und die die an die Hülsen 92 anschließenden Bereiche der Vakuumisolationsplatten 38 abdecken. Die Hülsen 92 und/oder die Abdeckscheiben 93 dienen zur Wärmeisolation der Anker 14. Sie tragen dazu bei, daß die Anker 14 keine Wärmebrücken bilden.

Das Wandelement 13 befindet sich auf einer Bodenplatte 11 aus Beton. In der Bodenplatte ist unter der Vakuumisolationsplatte 38 des Wandelements 13 eine mit dieser fluchtende, ebenfalls vertikal verlaufende Vakuumisolationsplatte 38 vorgesehen. Am unteren Ende der Bodenplatte 11 ist eine horizontal verlaufende Vakuumisolationsplatte 38a vorhanden. Zwischen der horizontal verlaufenden Vakuumisolationsplatte 38a und dem unteren Ende der vertikal verlaufenden Vakuumisolationsplatte 38 befindet sich ein Compriband 24a, das zum Toleranzausgleich dient. Ein entsprechendes Compriband 24a ist zwischen zwei aneinander angrenzenden horizontalen Vakuumisolationsplatten 38a vorhanden. Unter den horizontal verlaufenden Vakuumisolationsplatten 38a befindet sich eine Schicht Ausgleichsbeton 10, die durch eine Abdichtung 43 gegen drückendes Wasser gegenüber einer Sauberkeitsschicht 7 abgedichtet ist. An die Bodenplatte grenzt ein Beton-Winkelstein (Fertigteil) 59 an, in dessen Bereich eine Drainage 58 vorgesehen ist.

Zwischen dem unteren Ende des Wandelements 13 und dem oberen Ende der Bodenplatte 11 ist ein Ausgleichselement 17 vorgesehen.

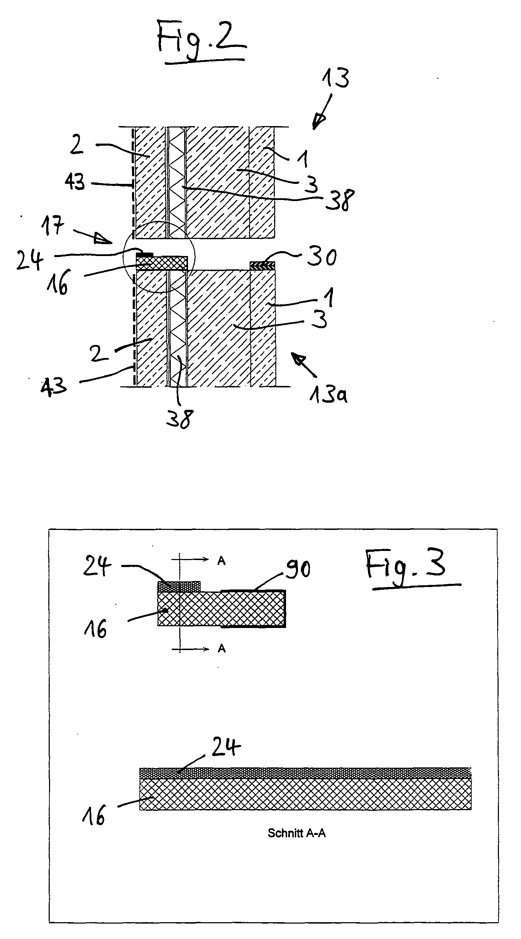

Fig. 2 zeigt eine vergrößerte Ansicht des Ausgleichselements 17, wobei im Unterschied zu Fig. 1 anstelle der Bodenplatte 11 ein unteres Wandelement 13a vorhanden ist. Das Ausgleichselement 17 befindet sich auf dem oberen Ende des unteren Wandelements 13a. Es umfaßt einen plattenförmigen Körper 16 aus einem zusammendrückbaren Material, nämlich PE-Schaumstoff, der als Plattenware oder als Fugenstreifen hergestellt sein kann, und Ausgleichsplättchen 30 aus Kunststoff. Der plattenförmige Körper 16 deckt das obere Ende des äußeren Betonfertigteils 2 und der Vakuumisolationsplatte 38 ab. Er schließt bündig mit der Außenfläche des äußeren Betonfertigteils 2 und der Innenfläche der Vakuumisolationsplatte 38 ab. Die Ausgleichsplättchen 30 liegen auf dem oberen Ende des inneren Betonfertigteils 1 auf. Sie schließen bündig mit der inneren und äußeren Endfläche des inneren Betonfertigteils 1 ab.

Fig. 3 zeigt den plattenförmigen Körper 16 in einer vergrößerten Darstellung, und zwar (oben) in einer der Fig. 2 entsprechenden Seitenansicht und (unten) als Schnitt längs der Linie A-A in der oberen Ansicht. Der plattenförmige Körper 16 ist von einer gasdichten und diffusionsdichten Schicht 90, nämlich einem Butylband, umgeben. Die gasdichte und diffusionsdichte Schicht 90 umgibt die innere Hälfte des plattenförmigen Körpers 16 an der Oberseite, der inneren Seitenfläche und der Unterseite, also in demjenigen Bereich, in dem die Stirnflächen der Vakuumisolationsplatten 38 des oberen Wandelements 13 und des unteren Wandelements 13a mit dem plattenförmigen Körper 16 in Berührung gelangen.

Auf der Oberseite des plattenförmigen Körpers 16 ist ein Compriband 24 vorgesehen, das im äußeren Bereich des plattenförmigen Körpers 16 auf diesem aufliegt und dessen äußere Seitenfläche mit der äußeren Stirnfläche des plattenförmigen Körpers 16 bündig abschließt. Das Compriband 24 kann ganz oder teilweise von einer gasdichten und diffusionsdichten Schicht umgeben sein, insbesondere von einem Butylband. Es kann mit dem plattenförmigen Körper 16 verbunden, vorzugsweise verklebt, sein.

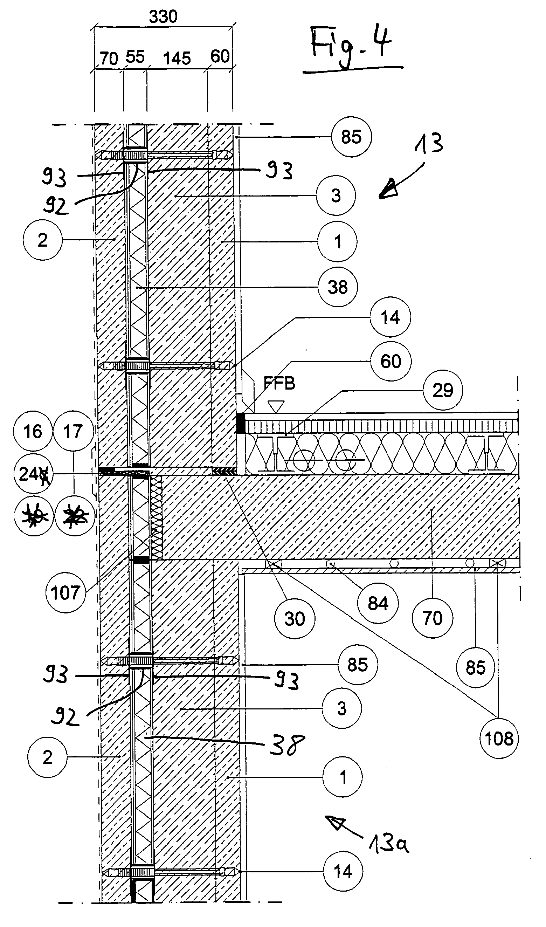

Fig. 4 zeigt eine abgewandelte Ausführungsform, bei der das innere Betonfertigteil 1 des unteren Wandelements 13a kürzer ist als dessen äußeres Betonfertigteil 2. In die Lücke zwischen dem oberen Ende des inneren Betonfertigteils 1 und des äußeren Betonfertigteils 2 ist eine horizontale Betondecke eingesetzt. Die Ausgleichsplättchen 30 aus Kunststoff liegen zwischen der Oberseite der Betondecke 70 und dem unteren Ende des inneren Betonfertigteils 1 des oberen Wandelements 13. Zwischen der äußeren Stirnfläche der Betondecke 70 und der Vakuumisolationsplatte 38 des unteren Wandelements 13a ist ein vertikal verlaufender Randdämmstreifen 107 als Betonierschutz für die Vakuumisolationsplatte 38 vorgesehen.

Bei der Herstellung des Bauteils nach Fig. 1 wird der plattenförmige Körper 16 mit dem Compriband 24 auf die Bodenplatte 11 aufgelegt. Anschließend wird das Wandelement 13 von oben abgesenkt, bis es die in Fig. 1 gezeigte Stellung einnimmt. Der plattenförmige Körper 16 und das Compriband 24 dienen als Toleranzausgleich. Danach wird der Ortbeton 3 eingebracht.

Das in Fig. 2 gezeigte Bauteil wird in derselben Weise hergestellt. Hier werden zusätzlich die Ausgleichsplättchen 30 auf das innere Betonfertigteil 1 des unteren Wandelements 13a aufgelegt.

Bei der Herstellung des Bauteils nach Fig. 4 werden der plattenförmige Körper 16 mit dem Compriband 24 und die Ausgleichsplättchen 30 auf das äußeren Betonfertigteil 2 des unteren Wandelements 13a bzw. auf die Oberseite der Betondecke 70 aufgelegt. Das obere Wandelement 13 wird abgesenkt, bis es die in Fig. 4 gezeigte Stellung einnimmt. Der plattenförmige Körper 16 und das Compriband 24 sowie die Ausgleichsplättchen 30 dienen als Toleranzausgleich. Danach wird der Ortbeton 3 eingebracht.

Die Höhenjustierung kann durch die Ausgleichsplättchen 30 aus Kunststoff erfolgen. Je nach erforderlicher Höhenüberbrückung werden eines oder mehrere Ausgleichsplättchen 30 eingelegt, die insgesamt die erforderliche Höhe haben. Die Ausgleichsplättchen können dieselbe Höhe haben, so daß das erforderliche Höhenmaß durch die Anzahl der Ausgleichsplättchen erreicht wird. Es ist aber auch möglich, stattdessen oder zusätzlich Ausgleichsplättchen in verschiedenen Höhen bzw. Stärken zu verwenden. Der Toleranzausgleich kann durch den plattenförmigen Körper 16 erfolgen sowie durch das Compriband 24.

Bei den Compribändern 24, 24a handelt es sich vorzugsweise um vorkomprimierte Fugendichtbänder aus offenzelligem Kunststoffschaum, insbesondere Polyurethan-Weichschaum, mit Polymerimprägnat oder mit einem Imprägnat auf Acrylatbasis.

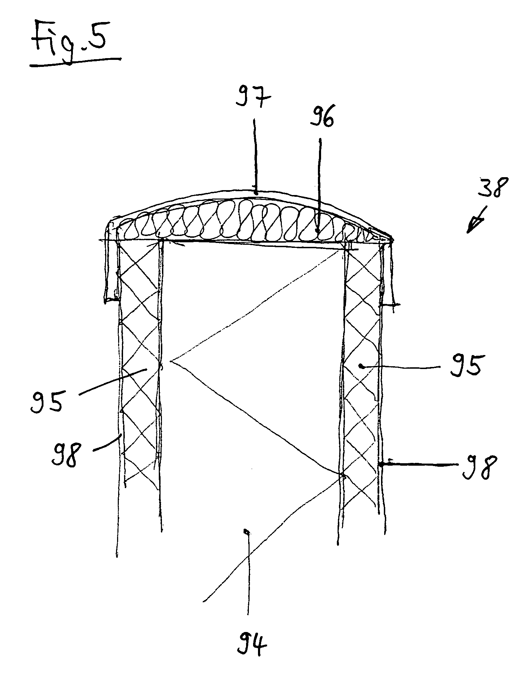

Fig. 5 zeigt den Randbereich einer Vakuumisolationsplatte 38, die eine Vakuumdämmplatte 94 umfaßt, die auf beiden Seiten von jeweils einer Platte 95 aus Polyurethanschaum oder aus massivem Polyurethan umgeben ist. Die Außenseiten der Platten 95 sind von einer diffusionsdichten und gasdichten Umhüllung 98 abgedeckt. Die Außenkanten der Vakuumdämmplatte 94 sind von einem Compriband 96 umgeben, das seinerseits von einem Butylband 97 umgeben ist. Das Butylband 97 übergreift das Compriband 96 und die äußeren Enden der Platten 95 einschließlich der Umhüllungen 98, mit denen es verbunden, insbesondere verklebt, ist. Das Compriband 96 ist gewölbt. Seine Stärke nimmt von der Mitte nach außen hin ab. Wenn benachbarte Vakuumisolationsplatten 38, 38' aneinandergelegt werden, werden die zugehörigen Compribänder 96 zusammengedrückt, wodurch ein Fugendichtschluß nebeneinanderliegender Vakuumisolationsplatten 38, 38' gewährleistet werden kann.

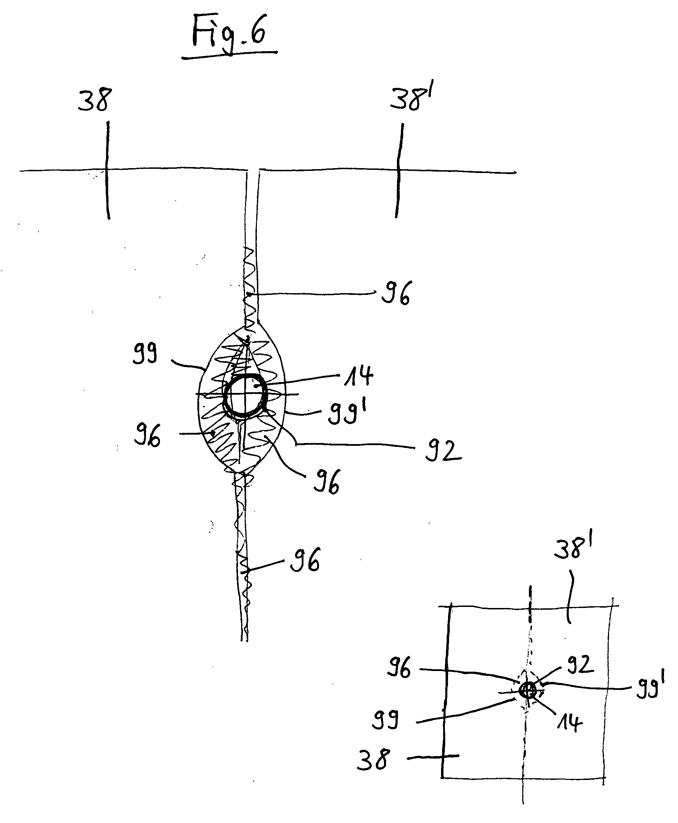

In Fig. 6 sind Teilbereiche von zwei nebeneinanderliegenden Vakuumisolationsplatten 38, 38' dargestellt. Im Bereich der Ankerdurchführung, also im Bereich einer Hülse 92 für einen Anker 14, weisen die Vakuumisolationsplatten 38, 38' jeweils Aussparungen 99, 99' auf, die einander gegenüberliegen. Der Bereich zwischen den Aussparungen 99, 99' und der Hülse 92 wird ebenfalls durch die Compribänder 96 gefüllt.

## Patentansprüche

1. Wandelement,
umfassend eine Vakuumisolationsplatte (38), ein äußeres Betonfertigteil (2) und ein inneres Betonfertigteil (1), die durch Anker (14) miteinander verbunden sind,
**dadurch gekennzeichnet,**
**daß** ein Betonfertigteil (1, 2) von der Vakuumisolationsplatte (38) beabstandet ist.

2. Wandelement nach Anspruch 1, **dadurch gekennzeichnet, daß** das innere Betonfertigteil (1) von der Vakuumisolationsplatte (38) beabstandet ist.

3. Ausgleichselement für ein Wandelement (13), umfassend eine Vakuumisolationsplatte (3), ein äußeres Betonfertigteil (2) und ein inneres Betonfertigteil (1), die durch Anker (14) miteinander verbunden sind, insbesondere für ein Wandelement nach Anspruch 1 oder 2.

4. Ausgleichselement nach Anspruch 3, **dadurch gekennzeichnet, daß** das Ausgleichselement (17) einen plattenförmigen Körper (16) aus einem zusammendrückbaren Material, vorzugsweise Kunststoff, vorzugsweise Schaumstoff, umfaßt.

5. Ausgleichselement nach Anspruch 3 oder 4, **dadurch gekennzeichnet, daß** der plattenförmige Körper (16) als Plattenware oder als Fugenstreifen hergestellt ist.

6. Ausgleichselement nach einem der Ansprüche 3 bis 5, **dadurch gekennzeichnet, daß** der plattenförmige Körper (16) von einer gasdichten und diffusionsdichten Schicht (90) umgeben ist.

7. Ausgleichselement nach Anspruch 6, **dadurch gekennzeichnet, daß** die gasdichte und diffusionsdichte Schicht (90) ein Kunststoffband umfaßt.

8. Ausgleichselement nach einem der Ansprüche 3 bis 7, **dadurch gekennzeichnet, daß** auf dem plattenförmigen Körper (16) ein Compriband (24) vorgesehen ist.

9. Ausgleichselement nach einem der Ansprüche 3 bis 8, **dadurch gekennzeichnet, daß** das Ausgleichselement (17) Ausgleichsplättchen (30), vorzugsweise aus Kunststoff, umfaßt.

10. Bauteil, bestehend aus einem Wandelement (13) nach Anspruch 1 oder 2 und einem Ausgleichselement (17) nach einem der Ansprüche 3 bis 9.

11. Bauteil, bestehend aus einem Wandelement, insbesondere einem Wandelement (13) nach Anspruch 1 oder 2, einem weiteren Bauelement (13a, 11, 70), insbesondere einem Wandelement (13a) nach Anspruch 1 oder 2, und einem Ausgleichselement (17) nach einem der Ansprüche 3 bis 9.

12. Bauteil nach Anspruch 10 oder 11, **dadurch gekennzeichnet, daß** das äußere Betonfertigteil (2) des oder eines Wandelements (13, 13a) mit einem plattenförmigen Körper (16) nach einem der Ansprüche 4 bis 8 versehen ist.

13. Bauteil nach einem der Ansprüche 10 bis 12, **dadurch gekennzeichnet, daß** das innere Betonfertigteil (1) des oder eines Wandelements (13, 13a) mit einem oder mehreren Ausgleichsplättchen (30) nach Anspruch 9 versehen ist.
